# EUROPÄISCHE PATENTSCHRIFT

(11) **EP 0 770 827 B1**
(45) Veröffentlichungstag und Bekanntmachung des Hinweises auf die Patenterteilung: **15.07.1998**
(21) Anmeldenummer: 96810262.4
(22) Anmeldetag: 24.04.1996
(51) Int. Cl.: F24D 3/14

(54) **Temperierbare Wand und Verfahren zur Herstellung der Wand**
Temperature-controllable wall and method for making the wall
Paroi thermo-réglable et méthode de fabrication de la paroi

(30) Priorität: 25.04.1995 CH 1176/95
(43) Veröffentlichungstag der Anmeldung: 02.05.1997
(73) Patentinhaber: Bless, Rolf, 8890 Flums (CH); Bless, Simon, 8890 Flums (CH)
(72) Erfinder: Bless, Rolf, 8890 Flums (CH); Bless, Simon, 8890 Flums (CH)
(74) Vertreter: Riederer, Conrad A., Dr.

(56) Entgegenhaltungen:
- CH-A- 479 031
- DE-A- 3 919 862
- DE-U- 9 017 305
- FR-A- 2 631 054

## Beschreibung

Die vorliegende Erfindung betrifft eine temperierbare Wand mit einer Schalung aus Schalungswänden, welche einen Schalungshohlraum bilden, einen mit den Schalungswänden fest verbundenen Kern aus einer festgewordenen Masse, wie Beton oder Fliessbeton, und in der Wand angeordneten Rohren für ein Wärmetransportmedium, sowie ein Verfahren und ein Schalungselement zu ihrer Herstellung.

Bei Wandheizungen mit unmittelbar in eine Betonwand einbetonierten Heizungsrohren stellt sich - insbesondere bei schnellem Aufheizen - das Problem von Wärmespannungen, die zu Rissen in der Betonwand führen können. Ein weiteres Problem bei Wandheizungen sind auch die in der Regel unterschiedlichen Wärmeausdehnungskoeffizienten der eingesetzten Rohre und von Beton. Darüberhinaus können durch das Fliessen und Kriechen des Betons Beschädigungen an den verlegten Rohren hervorgerufen werden, insbesondere dann, wenn sich die Rohre durch Wand-/Wand oder Wand-/Deckenstösse erstrecken.

Das Einbetonieren von Rohren während der Herstellung einer Mauer erfordert eine genaue zeitliche Abstimmung der durch die Maurer und die Heizungsinstallateure vorzunehmenden Arbeiten. Die Rohre können nämlich erst, nachdem die Armierungen eingelegt sind und solange die Verschalung noch offen ist, eingebracht werden. Auch wenn die zeitliche Koordination zwischen den einzelnen Berufsgruppen optimal klappt, kommt es trotzdem zu Verzögerungen, da das Verlegen und Festmachen der Rohre ziemlich zeitaufwendig ist. Dadurch wird der Arbeitsfluss behindert.

In der Praxis haben sich Wandheizungen, insbesondere bei kleinen Wohneinheiten wie Einfamilienhäusern, nicht durchgesetzt, obschon Wandheizungen gewisse Vorteile aufweisen, wie z.B. angenehmes Raumklima hervorgerufen durch die gleichmässige Wärmeabstrahlung von den Wänden. In Einfamilienhäusern kommen daher meist individuelle Heizkörper oder Bodenheizungen zum Einsatz. Im Vergleich zu den vorgenannten Heizungstypen bedingt der Einbau von Wandheizungen meist einen grösseren Installationsaufwand. Gegenüber Fussbodenheizungen ist auch zu berücksichtigen, dass die Wandflächen gerade bei relativ kleinen Räumen grösser sind als die dazugehörigen Bodenflächen. Dadurch ergeben sich beim Verlegen der Heizungen - bedingt durch die relativ grossen mit Rohren zu belegenden Flächen - naturgemäss ebenfalls höhere Kosten. Ein Vorteil hingegen ist, dass durch die im Vergleich zu Fussbodenheizungen grösseren Strahlungsflächen nicht nur ein angenehmeres Raumklima erreicht werden kann, sondern auch die Temperatur des Wärmeübertragungsmittels niedriger sein kann.

Die WO-A-91/12466 offenbart eine temperierbare Wand, die aus Steinen aufgebaut ist. Die Steine weisen an der Oberseite eine Längsnut auf, in der ein Wärmeleiter vollständig eingebettet liegt. An der Unterseite weisen die Steine eine seichte Längsnut auf. Beim Einmörteln der rohrförmigen Wärmeleiter in der oberen Längsnut ergeben sich kleine Erhöhungen von Mörtel im Bereich der Nuten. Beim Aufsetzen des darüberliegenden Steines greift der Mörtel in die seichte Längsnut ein. Dadurch ergibt sich ein sicherer Verband der einzelnen Steine in der Wand. Die Wärmeleiter sind schlangenförmig in der Wand verlegt. Zur Umlenkung der Wärmeleiter sind an den Seiten jeweils Biegemodels vorgesehen.

Vorteilhaft bei der beschriebenen temperierbaren Wand ist deren angenehme Wärmewirkung. Nachteilig hingegen ist die relativ aufwendige Herstellung und die Notwendigkeit von Spezialbausteinen. Weiter ist man bezüglich der Anordnung und Länge der in der Mauer zu installierenden Heizrohre beschränkt.

Die CH-A-479 031 betrifft ein Verfahren zur Herstellung einer Flächenheizung oder -kühlung sowie ein vorfabriziertes Element zur Durchführung des Verfahrens. Bei dem Herstellungsverfahren werden einzelne Rohreinheiten je mit einem plattenförmigen, vorfabrizierten Träger zu einem Element vereinigt. Mehrere Elemente werden zu einem Flächengebilde vereinigt und sodann die Rohreinheiten der einzelnen Elemente unter sich bzw. mit dem Kreislauf eines Wärmeträgers verbunden. Ein Vorteil der vorfabrizierten Träger ist, dass diese anstelle von Schalungselementen verwendet und in rationeller Weise vorfabriziert werden können. Nachteilig am Verfahren der CH-A-479 031 ist, dass die vorfabrizierten Elemente sich aus praktischen Gründen nur für die Herstellung von Deckenheizungen eignen, welche bauphysikalisch und thermisch jedoch keine optimale Lösung darstellen. Ausserdem sind die Träger aus Beton gefertigt und dementsprechend schwer. Bei der Verwendung der Elemente zur Herstellung einer Wandheizung müssten diese zur Bildung einer Wandschalung zuerst miteinander verbunden oder zusätzlich eingeschalt werden, was nur unter grossem Aufwand möglich wäre.

Die DE-U-9017 305 beschreibt eine ein- oder beidseitig mit Fliesen belegte Trennwand, in deren Betonkern partiell elektrische oder Warmwasser führende Heizeinheiten eingebettet sind. Die DE-U-9017 305 offenbart nichts über die Herstellung einer solchen heizbaren Fliesentrennwand. Vorteilhaft an der offenbarten Fliesentrennwand ist deren warme und wasserunempfindliche Oberfläche, was sie für Badezimmer sehr angenehm erscheinen lässt. Nachteilig ist, dass sie die üblichen Herstellungsschritte benötigt werden, wie Erstellen einer Schalung, Einlegen der Armierung und der Heizeinlage, Giessen der Wand, evtl. Anbringen eines Grundputzes und Belegen mit Fliesen. Das ohnehin schwierige Giessen der möglichst dünnen Wand ist zudem durch eine Einlage erschwert. Sie ist dadurch kaum kostensparend. Sie ist auch nicht auf ganze Häuser anwendbar, denn es handelt sich lediglich um eine Trennwand und keine Tragwand, und abgesehen davon: Wer möchte schon ausnahmslos geflieste Oberflächen?

Die DE-A-39 19 862 schlägt vor, durchströmbare Bauteile in der Art einer sogenannten verlorenen Schalung so einzubringen, dass die Wand, die Decke oder der Fussboden neben seiner Tragfunktion noch weitere Funktionen übernehmen kann, wie z.B. als Klimaanlage oder als Heiz- oder Kühlfläche. Die Bauteile sind beispielsweise als Stegdoppelplatten aus Aluminium oder Stahl hergestellt, in welche Kapillarrohre eingelegt sind, die von einem Flüssigkeitsmedium durchströmt sind. Dies erlaubt es, den Innenraum je nach Wunsch zu kühlen oder zu beheizen. Die Bauteile können in der Fabrik vorfabriziert werden. Auf der Baustelle können diese als verlorene Schalung auf die Unterkonstruktion aufgelegt und mit Beton vergossen werden. Zur Verbesserung der Verbindung zwischen Bauteil und Beton sind in den Bauteilen Bohrlöcher oder Einfräsungen vorgesehen, in welche der Beton einsickern und so eine Verankerung bilden kann. Die Bauteile der DE-A-39 19 862 sind in erster Linie für die Herstellung von Decken- oder Fussbodenheizungen geeignet.

Aufgabe der vorliegenden Erfindung ist es, eine temperierbare Wand bereitzustellen, welche ein angenehmes Raumklima schafft und rationell installiert werden kann.

Erfindungsgemäss wird dies dadurch realisiert, dass die Schalungswände aus Holz, Holzwerkstoffplatten, Spanplatten, zementgebundenen Spanplatten oder dergleichen gebildet sind, dass der Wandkern durch den Schalungshohlraum definiert ist, dass die festgewordenen Masse in den Schalungshohlraum gegossen ist, und dass die Rohre im Kern eingegossen sind. Durch eine Schalung aus Holz, Holzwerkstoffplatten, Spanplatten, zementgebundenen Spanplatten, Faserplatten oder dergleichen lässt sich ein besonders angenehmes Raumklima schaffen, da im Vergleich zu kalten, abweisenden Betonflächen eine höhere Oberflächen-temperatur erreicht werden kann. Ein weiterer Vorteil ist, dass die Oberflächenbeschaffenheit des Kerns keine Rolle spielt, da der Kern durch die Schalung eingefasst ist. Beton und Schalung können einen festen Verbund eingehen, was einen guten Wärmeübergang gewährleistet. Weiter ist Beton ein hervorragender Wärmespeicher und ein guter Wärmeleiter. Durch die grossen Wandflächen, die als Strahlungsflächen wirken, kann die Vorlauftemperatur des Wärmeübertragungsmittels, z.B. Wasser, um mehrere Grad Celsius niedriger sein als bei entsprechenden Fussbodenheizungen. Die erfindungsgemässe Wandheizung erzeugt daher ein ausgesprochen ausgeglichenes und angenehmes Wohnklima. Im Unterschied zu dem eingangs erwähnten Stand der Technik der DE-A-39 19 862 und der CH-A-479 031 sind die Rohre nicht in der Schalungswand selbst integriert, sondern in der ausgehärteten Masse eingegossen.

Die Herstellung der erfindungsgemässen Wandheizung ist rationell und kostengünstig, da sie weitgehend in der Fabrik vorgefertigt werden kann. Bei der Verbundschalungsbauweise werden nämlich in der Regel jeweils die Schalungen für ganze Wände resp. Stockwerke vorgefertigt, die auf der Baustelle nur noch versetzt werden müssen. Dadurch ergeben sich äusserst kurze Installationszeiten. Die erfindungsgemässe Wandheizung- resp. -kühlung kann also bereits in der Fabrik in die Schalung integriert werden. Durch den bei der fertigen Wand vorhandenen Verbund von Kern und Schalung wird ein guter Wärmeübergang erreicht. Von Bedeutung ist auch, dass die Rohre direkt im Beton eingegossen sind und so die Wärme an den als Wärmespeicher dienenden Kern abgeben können.

In Verbindung mit einer Fussbodenheizung lässt sich die Vorlauftemperatur für die Raumheizung noch weiter absenken. Diese erlaubt es, z.B. auch Thermalquellen mit relativ niedriger Wassertemperatur ohne Zuhilfenahme einer aufwendigen Wärmepumpe und zusätzlicher Energie direkt zu Heizzwecken zu benutzen. Eine niedrige Vorlauftemperatur verhindert auch ein Ueberheizen bei brüsken äusseren Temperaturänderungen.

Vorteilhaft sind die Schalungswände durch eine Vielzahl von Distanzhaltern miteinander verbunden. Die Distanzhalter halten die Schalungswände zusammen, unabhängig vom Verbund zwischen Kern und Schalungswände. Dadurch kann der Verbund zusätzlich verstärkt werden. Zweckmässigerweise sind die Rohre an den Distanzhaltern befestigt. Auf diese Weise lassen sich die Rohre besonders einfach ohne wesentliche Zusatzkosten verlegen. Es können aber auch Klemmleisten, Klemmfedern, gewellte Platten oder dergleichen vorgesehen sein, um die Rohre an der Schalungswand zu befestigen. Eine besonders einfache und vorteilhafte Lösung sieht vor, die Rohre an einer in der Wand vorgesehenen Bewehrung zu befestigen.

Vorteilhaft sind die Rohre in Abstand zu der dem zu beheizenden Raum zugewandten Schalungswand angeordnet. Dadurch ist der Wärmeübergang nach dem Gebäudeinneren besonders gut. Ueblicherweise sind die Rohre in Abstand von einigen Zentimetern, vorzugsweise bis ungefähr 8 cm, zu der inneren Schalungswand angeordnet. In einer vorteilhaften Ausführungsform einer beheizbaren Wand, insbesondere einer Gebäudeinnenwand, sind in Abstand zu beiden Schalungswänden jeweils Rohrstränge vorgesehen. Durch das Vorsehen von zwei Rohrsträngen lässt sich die Heizleistung praktisch verdoppeln.

Es ist zweckmässig, wenn die dem zu beheizenden Raum zugewandte Schalungswand einen höheren Wärmeleitkoeffezienten besitzt als die nach aussen orientierte Schalungswand. Damit lässt sich das Verhältnis von nach innen abgestrahlter Wärmemenge und nach aussen abgegebener Verlustwärme noch verbessern. Zur Erhöhung des Wärmeleitkoeffizienten können z.B. zementgebundene Spanplatten oder solche, welche Beimengungen eines guten Wärmeleiters aufweisen, eingesetzt werden. Grundsätzlich können die Schalungswände aber auch aus demselben Material bestehen, wobei dann im allgemeinen an der Aussenwand eine Isolation aufgebracht ist.

Vorteilhaft ist in der Wand wenigstens eine Aussparung vorgesehen, durch welche sich die Zu- und die Ableitung der Rohre erstrecken. In der Aussparung können z.B. Regelventile vorgesehen sein. Weiter können die Rohre in der Aussparung oder in Abstand dazu gekoppelt werden.

Erfindungsgemäss erfolgt die Herstellung der Wandheizung, indem vorgängig eine Schalung vorfabriziert wird, die mit den Schalungswänden einen der herzustellenden Wand entsprechenden Schalungshohlraum bildet, dass im Schalungshohlraum die Rohre für das Wärmetransportmedium und gegebenenfalls Bewehrungen angeordnet werden und dass die vorfabrizierte Schalung auf der Baustelle versetzt und der Schalungshohlraum mit einer fliessfähigen, aushärtbaren Masse, vorzugsweise Beton oder Fliessbeton, ausgegossen wird und die Rohre für das Wärmetransportmedium eingegossen werden. Dadurch lässt sich eine in einer Verbundschalung integrierte Heizung einfach und kostengünstig realisieren. Verbundschalungen - man spricht auch von "verlorener Schalung" - sind an und für sich bekannt und in den letzten Jahren vermehrt für den Bau von Geschäftshäusern, Hotels etc. eingesetzt worden. Ein Hauptvorteil der Verbundschalungsbauweise ist die im Vergleich zur konventionellen Bauweise kürzere Bauzeit. Dadurch, dass die Rohre für die Heizung bereits bei der Herstellung der Fertigschalung in dieselbe eingelegt werden, kann die Bauzeit weiter verkürzt werden. Eine aufwendige zeitliche Koordinierung der Arbeiten von Maurern und Heizungsinstallateuren ist nicht notwendig. Die Rohre können verlegt werden, sobald die eine Schalungshälfte mit den Abstanzhaltern und gegebenfalls Bewehrungen versehen wurde. Danach muss die Schalung nur noch zusammengefügt werden. Eine einfache und kostengünstige Verlegungsart ist, wenn die Rohre z.B. an den Armierungen mittels Bindern, Klammern etc. befestigt werden. In diesem Fall sind keine zusätzlichen Abstandshalter oder Klemmleisten nötig.

Nachfolgend werden Ausführungsbeispiele der Erfindung unter Bezugnahme auf die Figuren beschrieben. Es zeigt:
- Fig.1: eine Teilansicht einer erfindsgemässen temperierbaren Gebäudeaussenwand sowie einer Zwischendecke in Schalungsbauweise im Querschnitt;
- Fig.2: a) und b) zwei unterschiedliche Ausführungsbeispiele von termperierbaren Innenwänden, ebenfalls im Querschnitt;
- Fig.3.: eine perspektive Skizze einer Wand mit schlangenförmig verlegten Heizungsrohren sowie einer Zwischendecke, wobei letztere teilweise im Aufriss gezeigt ist;
- Fig.4: eine skizzenhafte Darstellung der Anordnung der Rohre an einer in der Wand vorgesehenen Bewehrung;
- Fig.5: a) die Wand von Fig.4 in perspektivischer Ansicht,
b) die Wand von Fig.4 im Schnitt;
- Fig.6: a) eine perspektivische Ansicht einer Schalungswand, an welcher die Rohre mittels einer Klemmleiste angeordnet sind,
b) einen Schnitt durch die Wand von Fig. 6a und
c) die Befestigung der Rohre mittels Klemmfedern an einer Schalungswand;
- Fig.7: a) eine perspektivische Ansicht einer beispielhaften Schalung mit Distanzhaltern und daran angeordneten Rohren, wobei die Rohre durch die Distanzhalter geführt sind,
b) einen Schnitt durch die Wand von Fig. 7a, und
c) ein Ausführungsbeispiel, bei welchem das Rohr auf den Distanzhalter aufliegt;
- Fig. 8: a) eine perspektivische Ansicht einer Schalung mit einem Filigran-Tragprofil als Armierung und daran angeordneten Rohren,
b) einen Schnitt durch die Wand von Fig. 8a).

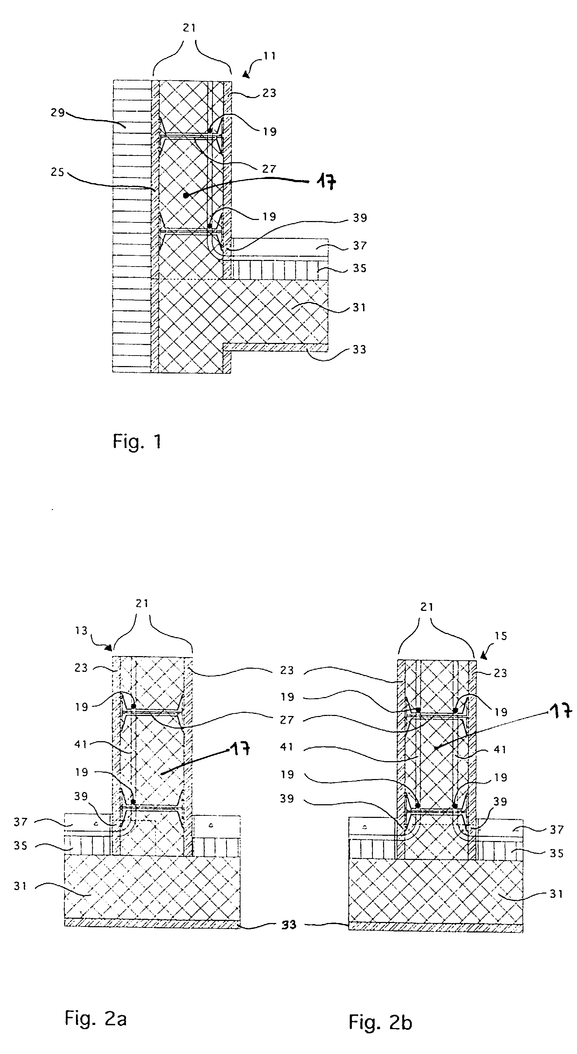

Die in den Figuren 1,2a und 2b gezeigten Gebäudewände 11,13,15 besitzen jeweils einen Kern 17 aus Beton, im Kern 17 integrierte Rohre 19 für ein Wärmetransportmedium und eine den Betonkern 17 einfassende Schalung 21. Der Betonkern 17 und die Schalung 21 bilden einen festen Verbund und zusammen die tragenden Gebäudewände 11,13,15.

Die Schalung 21 besitzt Schalungswände 23,25, welche durch eine Vielzahl von Distanzhaltern 27 fest miteinander verbunden sind. Die Distanzhalter 27 halten die Schalungswände 23,25 zusammen, wenn bei der Herstellung der Schalungshohlraum 26 mit Fliessbeton gefüllt wird. Die Distanzhalter 27 sind wie die Rohre 19 bei der fertiggestellten Wand im Beton fest eingegossen.

Wie aus der Figur 1 ersichtlich ist, sind die Rohre 19 zweckmässigerweise in Abstand zu der nach innen orientierten Schalungswand 23 angeordnet. Unter "innen" ist im Kontext die nach dem Gebäudeinneren orientierte Wandseite zu verstehen. Als Rohre können praktisch dieselben, wie sie in Bodenheizungen eingesetzt werden, verwendet werden (z.B. Polypropylenrohr, Kupferrohr, Kunststoffrohr mit Diffusionsperre etc.). Unter Rohr können auch zwei ineinandergeschobene Rohre verstanden werden. Die Verwendung von zwei ineinandergeschobenen Rohren hat den Vorteil, dass das innere Rohr für das Wärmetransportmedium nachträglich ausgewechselt werden könnte, ohne dass die Mauer beschädigt werden müsste.

Ueblicherweise sind die Rohre bis zu ungefähr 8 cm, vorzugsweise ca. 5 bis 6 cm von der Schalungswand 23 entfernt angeordnet. Werden die Rohre 19 in der Wand 11 näher zum Gebäudeinneren hin angeordnet, so ergibt sich an der inneren Schalungswand 23 eine höhere Temperatur als an der äusseren Schalungswand 25. Da Beton bekanntlich ein guter Wärmeleiter ist, verteilt sich die von den Rohren 19 abgegebene Wärme relativ schnell und erwärmt die innere Schalungswand 23 gleichmässig. Der Verbund von Beton und Schalungswand ergibt einen guten Wämeübergang. Um den Wärmeverlust an die Umgebung möglichst gering zu halten, ist an der äusseren Schalungswand 25 eine Isolation 29, z.B. aus Dämmplatten, vorgesehen. Die nach innen orientierten Schalungswände 23 können mit einer gewünschten Oberfläche, z.B. Holzverkleidung, Anstrich, Dünnputz, Fliesen, Tapeten etc. versehen sein.

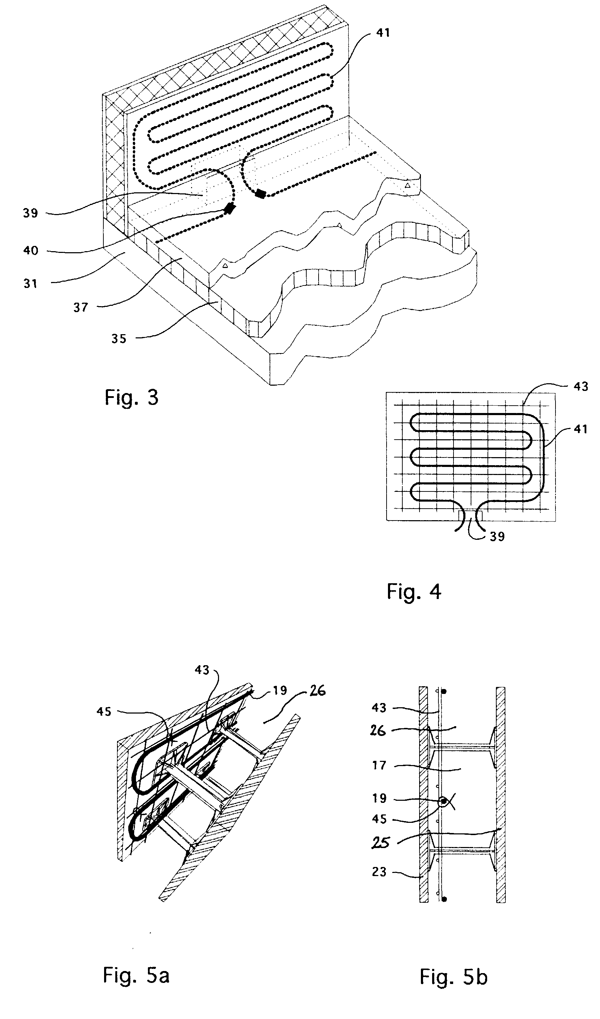

In den Figuren 1 und 2 ist eine Zwischendecke 31 mit Deckenschalung 33 sichtbar. Auf der Decke 31 befindet sich eine Isolation 35, auf welcher ein Unterlagsboden 37 angeordnet ist. Im Bereich der Isolation 35 und des Unterlagsbodens 37 ist in der Schalungswand 23 eine Aussparung 39 vorgesehen. In der Aussparung 39 münden die Zu- und die Ableitung der im Betonkern 19 schlangenförmig verlegten Rohre 19 (Figur 3). Pro Wand sind jeweils ein oder mehrere separate Rohrstränge 41 vorgesehen. Jeder Strang kann individuell geheizt werden oder es können mehrere Rohrstränge in Serie geschaltet sein. Kopplungen 40 für die Rohre können im Bereich des Unterlagsbodens oder in der Aussparung 39 vorgesehen sein.

Die Anordnung der Heizungsrohre 19 in Gebäudeinnenwänden ist unkristisch. Die Rohre 19 können, wie in Fig. 2a gezeigt, asymmetrisch, also näher zu einer der beiden Schalungswände 23' angeordnet sein, oder es können zwei Stränge 41',41" von Heizungsrohren vorgesehen sein, wenn eine möglichst grosse Wärmeabstrahlung erreicht werden soll.

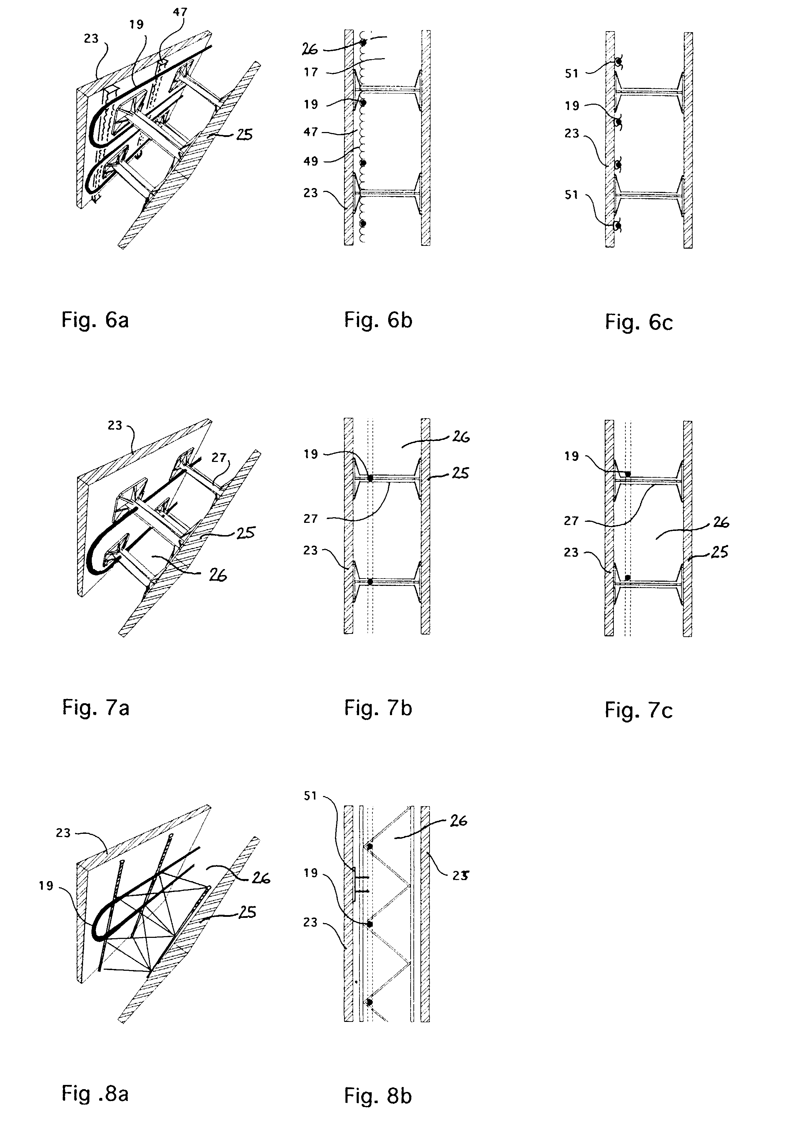

Zur Herstellung der Gebäudewände 11,13,15 werden zweckmässigerweise zuerst die Schalungswände massgenau zugeschnitten. Danach werden an einer Schalungswand die Distanzhalter, gegebenenfalls die Bewehrungen und die Rohre 19 angeordnet. In den Figuren 4 bis 9 sind verschiedene Befestigungsarten für die Rohre 19 dargestellt. Gemäss den Figuren 4 und 5 können die Rohre schlangenförmig an einer in der Betonwand 17 vorgesehenen Bewehrung 43 mittels Kabelbindern 45, wie sie auch zum Zusammenbinden von Kabelbäumen gebraucht werden, befestigt werden. Die Bewehrung selbst wird zweckmässigerweise mittels bekannten Distanzhaltern (nicht eingezeichnet) oder mittels der Distanzhalter 27 in Abstand von der Schalungswand angeordnet.

Eine zuverlässige und rasche Befestigung der Rohre 19 kann mittels der in Figur 6 a,b gezeigten Klemmleiste 47 erfolgen. Diese besitzt in Abstand voneinander angeordnete Vertiefungen 49, in welche die Rohre passen. Die Klemmleiste 47 kann senkrecht, wie in der Figur 6a gezeigt, oder auch waagrecht an der Schalungswand 47 angeschlagen werden. In Figur 6c ist eine weitere Befestigungsart mit Klemmfedern 51 gezeigt.

Eine besonders zweckmässige Befestigungsart zeigt Figur 7. Gemäss diesem Ausführungsbeispiel werden die Rohre 19 an den Abstandshaltern 27 befestigt. Diese weisen vorteilhaft eine Aussparung auf, durch welche die Rohre geführt sind. Die Rohre können aber auch mit separaten Befestigungsmitteln an den Abstandshaltern befestigt werden.

Die Figur 8 zeigt, wie die Rohre 19 an einer im Querschitt dreiecksförmigen Filigran-Armierung 51 angeordnet werden können. Die Befestigung der Rohre 19 an der Armierung 51 kann mit geeigneten Bindern oder flexiblen Klammern erfolgen.

Die Herstellung der temperierbaren Wände erfolgt derart, dass zuerst in einem Werk die Schalungswände 23, 25 für die herzustellenden Wände und Decken massgenau vorgefertigt werden. Danach werden an den Schalungswänden 23, 25 mittels einer Schablone die Abstandshalter 27 montiert. Die heutzutage verwendeten Distanzhalter 27 bestehen in der Regel aus zwei- oder mehreren Teilen, die sich beispielsweise mittels Schnappverschlüssen schlossartig miteinander verbinden lassen. Nachdem äussere und innere Schalungswände 23, 25 mit einer entsprechenden Anzahl von Distanzhaltern 27, resp. Teilen davon, versehen wurden, können die Rohre 19 für das Wärmetransportmedium und gegebenfalls die Bewehrungen 43 an den Schalungswänden 23, 25 angebracht werden. Das Festmachen der Rohre 19 an den Schalungswänden 23, 25 erfolgt vorzugsweise auf eine der oben bereits angegebenen Art. Danach, d.h. wenn alle zwischen den Schalungswänden 23, 25 vorgesehenen Rohre 19, Bewehrungen 43 und evtl. Aussparungen 39 eingebaut sind, können die Schalungswände 23, 25 miteinander verbunden werden. Normalerweise erfolgt dies bereits im Herstellungswerk, kann aber auch auf der Baustelle geschehen.

Danach werden die fertigen, vorfabrizierten Schalungen 21 auf die Baustelle transportiert und versetzt. Ueblicherweise werden die Schalungswände 23, 25 für die Herstellung eines ganzen Stockwerks aufgestellt. Anschliessend werden die Schalungshohlräume 26 mit Fliessbeton gefüllt. Die aus den fertigen Wänden ragenden Rohre 19 für das Wärmetransfermedium können sodann mit einer Verteilerbatterie gekoppelt werden. Die Rohre werden vorteilhaft im Unterlagsboden 37 verlegt. Es ist jedoch denkbar, auch in den Böden Rohrstränge 41 vorzusehen und eine Wand-/Fussbodenheizung herzustellen. Müssen die Rohre 19 gekoppelt werden, so können die Kopplungen im Bereich des Unterlagsbodens 37 vorgesehen werden (Fig.3). Dadurch, dass die Rohre 19 sich nicht durch direkt aneinanderstossende Wand-/Wand oder Wand-/Deckenstösse erstrecken, ist auch keine Gefahr vorhanden, dass die Rohre 19 infolge Kriechens oder Fliessens des Betons Schaden nehmen könnten.

### Bezugsziffern

- 11: Gebäudeaussenwand
- 13: Gebäudeinnenwand mit einfacher Heizung
- 15: Gebäudeinnenwand mit zweifacher Heizung
- 17: Kern aus Beton
- 19: Rohre für ein Wärmetransportmedium
- 21: Schalung
- 23,25: Schalungswände
- 26: Schalungshohlraum
- 27: Distanzhalter
- 29: Isolation an der Gebäudeaussenwand
- 31: Decke
- 33: Deckenschalung
- 35: Isolation unter Unterlagsboden
- 37: Unterlagsboden
- 39: Aussparung
- 40: Kopplung
- 41,41': Strang
- 43: Bewehrung
- 45: Kabelbindern
- 47: Klemmleiste
- 49: Vertiefungen der Klemmleiste
- 51: Klemmfeder

## Patentansprüche

1. Temperierbare Wand (11) mit einer Schalung aus Schalungswänden (23,25), welche einen Schalungshohlraum (26) bilden, einem mit den Schalungswänden (23,25) fest verbundenen Kern (17) aus einer festgewordenen Masse, wie Beton oder Fliessbeton, und in der Wand angeordneten Rohren (19) für ein Wärmetransportmedium, **dadurch gekennzeichnet, dass** die Schalungswände (23, 25) aus Holz, Holzwerkstoffplatten, Spanplatten oder zementgebundenen Spanplatten gebildet sind, dass der Wandkern (17) durch den Schalungshohlraum (26) definiert ist und die festgewordene Masse zwischen die Schalungswände (23,25) in den Schalungshohlraum (26) gegossenen ist, und dass die Rohre (19) im Kern (17) eingegossen sind.

2. Wand nach Anspruch 1, dadurch gekennzeichnet, dass die Schalungswände (23,25) der Schalung (21) durch eine Vielzahl von Distanzhaltern (27) miteinander verbunden sind.

3. Wand nach Anspruch 1 oder 2, dadurch gekennzeichnet, dass in Abstand zu beiden Schalungswänden (23,25) jeweils Rohrstränge in der Wand (11,13,15) angeordnet sind.

4. Wand nach einem der Ansprüche 1 bis 3, dadurch gekennzeichnet, dass die dem zu beheizenden Raum zugewandte Schalungswand (23) einen höheren Wärmeleitkoeffezienten besitzt als die nach aussen orientierte Schalungswand (25).

5. Wand nach einem der Ansprüche 1 bis 4, dadurch gekennzeichnet, dass in der Wand (11,13,15) wenigstens eine Aussparung vorgesehen ist, durch welche sich die Zu- und die Ableitung der Rohre (19) erstrecken.

6. Verfahren zur Herstellung einer Wand mit Wandheizung, bei welchem Verfahren eine Schalung vorfabriziert wird, wobei Schalungswände (23,25) einen Schalungshohlraum (26) bilden, Rohre (19) für ein Wärmetransportmedium im Schalungshohlraum (26) angeordnet werden, die Schalung auf der Baustelle versetzt wird und ein Wandkern (17) aus einer fliessfähigen, aushärtbaren Masse, vorzugsweise Beton oder Fliessbeton, gegossen wird, **dadurch gekennzeichnet, dass** mit den Schalungswänden (23,25) ein dem herzustellenden Wandkern (17) entsprechender Schalungshohlraum (26) gebildet wird, dass gegebenenfalls Bewehrungen (43) im Schalunghohlraum (26) angeordnet werden, und dass der Schalungshohlraum (26) ausgegossen wird und die Rohre (19) für das Wärmetransportmedium eingegossen werden.

7. Verfahren nach Anspruch 6, dadurch gekennzeichnet, dass die Rohre (19) in Abstand zu den Schalungswänden (23,25) angeordnet werden.

8. Verfahren nach Anspruch 6 oder 7, dadurch gekennzeichnet, dass die Schalungswände (23,25) durch eine Vielzahl von Distanzhaltern (27) miteinander verbunden und die Rohre (19) an den Distanzhaltern (27) befestigt werden.

9. Verfahren nach Anspruch 6 oder 7, dadurch gekennzeichnet, dass die Rohre (19) auf separaten Distanzhaltern (27), Klemmleisten (47), oder Klemmfedern (51) angeordnet werden.

10. Verfahren nach einem der Ansprüche 6 bis 9, dadurch gekennzeichnet, dass die Rohre (19) an der Bewehrung (43) festgemacht werden.

11. Schalungselement zur Herstellung einer temperierbaren Wand, mit Schalungswänden (23,25), die mit Distanzhaltern (27) miteinander verbunden sind und mindestens ein in einem Abstand zu den Schalungswänden angeordneten Rohr (19) für ein Wärmetransportmedium, **dadurch gekennzeichnet dass** die Schalungswände (23,25) einen Wandkern (17) definierenden Schalungshohlraum (26) bilden und das Rohr (19) im Schalungshohlraum (26) angeordnet ist.

12. Schalungselement nach einem der Ansprüche 3 bis 5.

13. Raumheizungs- oder -kühlungssystem mit wenigstens einer temperierbaren Wand gemäss einem der Ansprüche 1 bis 5.

## Claims

1. Temperature-controlled wall (11) comprising a form with form panels (23,25) for forming a hollow space (26), with a core (17) of a hardened material, such as concrete or fluid concrete, firmly connected to the form panels (23,25), and pipes (19) for a heat transfer medium located within the wall, characterised in that form panels (23,25) are constructed out of wood, boards made of wooden base material, wood-chip boards or cement bound wood-chip boards, in that the core (17) of the wall is defined by the hollow space (26) and the hardened material is poured in-between the form panels (23,25) into the hollow space (26), and in that the pipes (19) are embedded in the core (19).

2. Wall according to claim 1, characterised in that the form panels (23,25) of the form (21) are interconnected by a plurality of spacers.

3. Wall according to claim 1 or 2, characterised in that pipe conduits are located in the wall (11,13,15) at a distance to each of the two form panels (23,25).

4. Wall according to one of the claims 1 to 3, characterised in that the form panel (23) facing the room to be heated has a higher coefficient of the thermal conductivity than the form panel (25) oriented outwardly.

5. Wall according to one of the claims 1 to 4, characterised in that there is provided at least one recess in the wall (11,13,15) through which the supply and the offtake of the pipes (19) extend.

6. Process for the making of a wall with wall heating, comprising the steps of prefabricating a form by forming a hollow space (26) with form panels (23,25) and locating pipes (19) for a thermal transfer medium in the hollow space (26), setting the form on the construction place, pouring a core (17) with a material able to flow and to harden, preferably concrete or fluid concrete, characterised by the steps of forming with the form panels (23,25) a hollow space (26) relating to the core (17) to be produced, and, if necessary, arranging reinforcements (43) in the hollow space (26), and filling the hollow space (26) and embedding the pipes (19) for the thermal transfer medium.

7. Process according claim 6, characterised in the step of arranging the pipes (19) in a distance to the form panels (23,25).

8. Process according claim 6 or 7, characterised in the steps of interconnecting the form panels (23,25) by a plurality of spacers (27) and fixing the pipes (19) on the spacers (27).

9. Process according claim 6 or 7, caracterised in the step of arranging the pipes (19) on separate Spacers (27), clamping strip (47) or clamping spring (51).

10. Process according to one of the claims 6 to 9, characterised in the step of fixing the pipes (19) on the reinforcement (43).

11. Form element for the making of a temperature-controlled wall, including form panels (23,25) interconnected with Spacers (27) and at least one pipe (19) for a thermal transfer medium arranged in a distance to the form panels, characterised in that the form panels (23,25) form a hollow space (26) defining a core (17) and in that the pipe (19) is arranged in the hollow space (26).

12. Form element according to one of the claims 3 to 5.

13. Room heating system or room cooling system with at least one temperature-controlled wall according to one of the claims 1 to 5.

## Revendications

1. Paroi thermo-réglable comprenant un coffrage fait de panneaux de coffrage (23,25) qui forment un espace creux (26), un noyau en matière endurcit, comme du béton ou du béton fluid, et des conduits (19) pour un médium de transfère thermique arrangés dans la paroi, caractérisée en ce que les panneaux de coffrage (23,25) sont fait de bois, de panneaux d'une matière de base tirée du bois, de panneaux de copeaux ou de panneaux de copeaux liés avec du ciment, en ce que le noyau est définit par l'espace creux (26) et la masse endurcit est moulée entre le panneaux de coffrage (23,25) dans l'espace creux (26), et en ce que les conduits (19) sont scellés dans le noyau.

2. Paroi selon revendication 1, caractérisée en ce que les panneaux de coffrage (23,25) sont liés les uns avec les autres par une pluralité de supports de distance (27).

3. Paroi selon revendication 1 ou 2, caractérisée en ce que des lignes de conduit sont arrangées dans la paroi (11,13,15).

4. Paroi selon une des revendications 1 à 3, caractérisée en ce que le panneau de coffrage (23) tourné vers l'espace à chauffer montre un efficient de transfère thermique plus haut que le panneau de coffrage (25) orienté vers l'extérieur.

5. Paroi selon une des revendications 1 à 4, caractérisée en ce que dans la paroi (11,13,15) il est prévu un espace libre, par lequel l'amenée et la dérivation des conduits (19) s'étendent.

6. Méthode de fabrication d'une paroi avec chauffage de paroi, comprenant les pas de préfabriquer un coffrage en formant un espace creux (26) avec des panneaux de coffrage (23,25), d'arranger des conduits (19) pour un médium de transfère thermique dans l'espace creux, de mettre le coffrage au chantier et de mouler un noyau de matière fluid et capable à faire la prise, préférablement du béton ou du béton fluid, caractérisée par le pas de former avec les panneaux de coffrage (23,25) un espace creux (26) correspondant au noyau (17) à fabriquer, le pas d'arranger des armatures (43) dans l'espace creux (26) si nécessaire, et les pas de mouler l'espace creux (26) et de sceller les conduit (19) pour le médium de transfère thermique.

7. Méthode selon revendication 6, caractérisée par le pas d'arranger les conduits (19) à distance des panneaux de coffrage (23,25).

8. Méthode selon revendication 6 ou 7, caractérisée par les pas de lier les panneaux de coffrage (23,25) les uns avec les autres par une pluralité de supports de distance (27) et d'attacher les conduits (19) aux supports de distance (27).

9. Méthode selon revendication 6 ou 7, caractérisée par le pas d'arranger les conduits (19) à des supports de distance (27) distinct, des listeau de serrage (47) ou des ressorts de serrage (51).

10. Méthode selon une des revendications 6 à 9, caractérisée par le pas d'attacher les conduits (19) à l'armature(43).

11. Elément de coffrage pour la fabrication d'une paroi thermo-réglable, avec des panneaux de coffrage (23,25) liés les uns avec les autres par des supports de distance (27), et au moins un conduit (19) pour un médium de transfère thermique, caractérisé en ce que les panneaux de coffrage (23,25) définissent un espace creux (26) et que le conduit est arrangé dans l'espace creux (26).

12. Elément de coffrage selon une des revendications 3 à 5.

13. Système de chauffage ou de refroidissement d'espace avec au moins une paroi thermo-réglable selon une des revendications 1 à 5.
